# EUROPÄISCHE PATENTSCHRIFT

(11) **EP 3 778 300 B1**
(45) Veröffentlichungstag und Bekanntmachung des Hinweises auf die Patenterteilung: **24.01.2024**
(21) Anmeldenummer: 20188681.9
(22) Anmeldetag: 30.07.2020
(51) Int. Cl.: B60P 3/22

(54) **VENTILANORDNUNG FÜR EIN TRANSPORTFAHRZEUG**
VALVE ASSEMBLY FOR A TRANSPORT VEHICLE
AGENCEMENT DE SOUPAPE POUR UN VÉHICULE DE TRANSPORT

(30) Priorität: 15.08.2019 DE 102019122016
(43) Veröffentlichungstag der Anmeldung: 17.02.2021
(73) Patentinhaber: Feldbinder Spezialfahrzeugwerke GmbH, 21423 Winsen/Luhe (DE)
(72) Erfinder: Kley, Wolf-Dietrich, 21423 Winsen/Luhe (DE)
(74) Vertreter: RGTH

(56) Entgegenhaltungen:
- WO-A1-2010/066291
- DE-U1-202009 007 067
- DE-U1-202018 105 168
- US-A1- 2017 267 154

## Beschreibung

Die Erfindung betrifft eine Ventilanordnung, insbesondere zum Öffnen oder Verschließen einer Ventilöffnung eines Behälters von einem Transportfahrzeug, sowie ein Steuerungssystem.

### Stand der Technik

Zum Transportieren von, beispielsweise rieselfähigem, Schüttgut oder von Flüssigkeiten werden üblicherweise Silofahrzeuge oder Tankwagen eingesetzt. Derartige Transportfahrzeuge weisen einen Behälter zum Aufnehmen des Transportguts auf, welches über eine Einfüllöffnung in den Behälter eingebracht wird. An einer dem Untergrund des Transportfahrzeugs zugewandten Seite geht der Behälter üblicherweise in einen Auslaufstutzen über. Der Auslaufstutzen kann über eine Ventilanordnung geöffnet oder verschlossen werden. Üblicherweise erfolgt die Ansteuerung der Ventilanordnung über einen pneumatischen Antrieb.

Nachteilig einer derartigen, pneumatisch angetriebenen, Ventilanordnung ist jedoch, dass der Benutzer keine Informationen über den Verschlusszustand der Ventilanordnung erhält. Hierdurch kann eine derartige Ventilanordnung nicht oder nur mit großem technischen Aufwand an eine vollelektronische bzw. vollautomatische Steuerung angebunden werden.

Aus DE 20 2009 007067 U1 ist eine Fernanzeige für eine Auslaufklappenstellung bei Silofahrzeugen, welche dadurch gekennzeichnet ist, dass die Auslaufklappe in verschiedene Stellungen von offen bis geschlossen mittels Auslaufklappenantrieb, welcher mittels Energieversorgung z.B. elektrisch, pneumatisch, hydraulisch, etc. angetrieben wird, gebracht wird bekannt.

Aus DE 20 2018 105168 U1 ist eine Auslaufeinrichtung für einen Auslaufstutzen eines Behälters für ein staubförmiges oder körniges Füllgut, aufweisend ein Ventil mit einem Ventilkörper, welcher mit dem Auslaufstutzen verbindbar ist, und einer Ventilklappe zum Verschließen einer Auslauföffnung des Ventilkörpers, dadurch gekennzeichnet, dass die Auslaufeinrichtung mindestens einen elektromechanischen Antrieb und eine mit dem Ventilkörper verbindbare Halteeinheit zum Aufnehmen des elektromechanischen Antriebs aufweist, wobei eine Stellung der Ventilklappe durch den elektromechanischen Antrieb über eine Kraftübertragungseinheit veränderbar ist bekannt.

Aus WO 2010/066291 A1 ist ein Absperrsystem für eine Entleerungsöffnung einer Auslaufschüssel eines Fahrzeugdrucksilos für rieselfähiges Schüttgut, umfassend ein Verschlusselement, eine Hubeinrichtung zum Antrieb des Verschlusselements, eine Trägereinrichtung für die Hubeinrichtung, und eine im montierten Zustand an der Peripherie der Entleerungsöffnung vorgesehene Dichtungsfläche bekannt.

### Offenbarung der Erfindung

Der Erfindung liegt die Aufgabe zugrunde eine Ventilanordnung zu schaffen, welche mit einer vollelektronischen Steuerung kompatibel ist.

Diese Aufgabe wird durch die im Anspruch 1 angegebenen Merkmale gelöst. Weitere vorteilhafte Ausgestaltungen der Erfindung sind in den Unteransprüchen beschrieben.

Gemäß einem Aspekt der Erfindung wird eine Ventilanordnung, insbesondere zum Öffnen oder Verschließen einer Ventilöffnung eines Behälters von einem Transportfahrzeug, bereitgestellt.

Die Ventilanordnung weist einen elektrischen Antrieb auf. Eine mit dem elektrischen Antrieb direkt oder über eine mechanische Übersetzung verbundene Koppelstange ist endseitig mit einem Ventilkörper verbunden. Der mit der Koppelstange verbundenen Ventilkörper dient zum Freigeben oder Schließen einer Ventilöffnung. Erfindungsgemäß ist der elektrische Antrieb in einem gegen Fluide abgedichteten Gehäuse angeordnet. Vorzugsweise ist die Koppelstange relativ zum Gehäuse translatorisch verfahrbar und erstreckt sich durch eine Öffnung des Gehäuses hindurch.

Der elektrische Antrieb kann hierbei dazu eingesetzt werden, die Koppelstange entlang einer länglichen Ausdehnung der Koppelstange zu Verfahren. Insbesondere kann die Koppelstange durch den elektrischen Antrieb aus dem Gehäuse hinausgeschoben werden oder in das Gehäuse hineingezogen werden. Abhängig davon, wie die Ventilöffnung und der Ventilkörper ausgestaltet sind, kann die Ventilöffnung bei einem Einziehen der Koppelstange in das Gehäuse oder bei einem Hinausschieben der Koppelstange aus dem Gehäuse geöffnet bzw. freigegeben werden.

Die Ventilanordnung ist beispielsweise in einem Aufnahmeraum eines Behälters des Transportfahrzeugs befestigt. Insbesondere kann die Ventilöffnung im Bereich eines Auslaufstutzens derart positioniert sein, dass durch einen Öffnen der Ventilanordnung der Behälter entleert wird. In einem gefüllten Zustand des Behälters befindet sich die Ventilanordnung innerhalb des Füllguts bzw. des Transportguts. Aufgrund der Abdichtung des Gehäuses, in welchem der elektrische Antrieb angeordnetes, gegenüber Fluiden kann die Ventilanordnung auch bei einem flüssigen, staubförmigen oder bei einem körnigen bzw. grobkörnigen Transportgut uneingeschränkt eingesetzt werden, da die Ventilanordnung vom Transportgut umspült bzw. umgeben ist. Beispielsweise kann die Öffnung des Gehäuses eine Wellendichtung zum Abdichten der durchgeführten Koppelstange aufweisen.

Bei einem Öffnen der Ventilanordnung entsteht eine Strömung des Transportguts aus der Ventilöffnung hinaus. Der Ventilkörper kann hierbei vorzugsweise konisch bzw. sich in Richtung der Koppelstange verjüngend ausgeformt sein. Hierdurch kann eine vom elektrischen Antrieb benötigte Kraft zum beabstanden des Ventilkörpers von der Ventilöffnung reduziert werden.

Durch den Einsatz des elektrischen Antriebs können die bisher üblichen pneumatischen Betriebe zum Verändern eines Verschlusszustands von Ventilanordnungen entfallen. Hierdurch können Informationen darüber ermittelt werden, in welcher Stellung der Ventilkörper sich befindet. Derartige Informationen können insbesondere durch die Betriebsparameter des elektrischen Antriebs ermittelt werden.

Durch die Verwendung eines elektrischen Antriebs kann ein, gegenüber einem pneumatischen Antrieb, präziseres Öffnen und Verschließen der Ventilöffnung ermöglicht werden. Hierdurch kann eine derartige Ventilanordnung technisch besonders einfach in eine vollelektronische Steuerung integriert bzw. mit einer derartigen Steuerung verbunden werden.

Der elektrische Antrieb kann insbesondere in dem Gehäuse angeordnet oder als ein Teil des Gehäuses ausgestaltet sein. Analog hierzu kann die mechanische Übersetzung ebenfalls ein Teil des Gehäuses oder in des Gehäuse hineingesetzt sein.

Gemäß einem Ausführungsbeispiel ist der elektrische Antrieb dazu eingerichtet, die Koppelstange und den mit der Koppelstange verbundenen Ventilkörper entlang einer Symmetrieachse des Ventilkörpers zu bewegen. Bevorzugterweise ist der elektrische Antrieb als ein elektrischer Linearmotor oder als ein mit der mechanischen Übersetzung wechselwirkender Elektromotor ausgestaltet. Hierdurch kann die Ventilanordnung durch unterschiedliche elektrische Antriebe zum Öffnen oder Verschließen der Ventilöffnung des Behälters angetrieben werden. Insbesondere kann der elektrische Antrieb als ein linearer oder ein rotierender Servomotor ausgestaltet sein, wodurch die Position bzw. ein Auslenkungsgrad des elektrischen Antriebs präzise einstellbar und auslesbar ist. Durch den Einsatz eines derartigen elektrischen Antriebs kann ein Entladevorgang des Behälters des Transportfahrzeugs in einem vollen Umfang automatisiert werden, so dass geringere Anforderung an ein Bedienungspersonal gestellt werden.

Die mit dem Ventilkörper verbundene Koppelstange kann technisch besonders einfach translatorisch ausgelenkt werden, wenn die mechanische Übersetzung dazu eingerichtet ist, eine Rotationsbewegung des elektrischen Antriebs in eine translatorische Bewegung umzuwandeln. Vorzugsweise ist die mechanische Übersetzung als ein Gewindespindeltrieb, ein Zahnstangentrieb oder ein Riementrieb ausgeführt. Es kann somit ein Elektromotor zum Ausführen einer linearen Bewegung der Koppelstange herangezogen werden, durch welche der Ventilkörper von der Ventilöffnung beabstandet oder in die Ventilöffnung hineingesetzt werden kann.

Das Gehäuse der Ventilanordnung kann besonders effizient hermetisch gegenüber einer Umgebung des Behälters geschützt werden, wenn die Öffnung und/oder die durch die Öffnung aus dem Gehäuse hinausragende Koppelstange durch mindestens eine Dichtung und/oder Wellendichtring gegen Fluide abgedichtet sind. Vorzugsweise können die Dichtung und/oder der Wellendichtring als dynamische, radial wirkende, Dichtungen ausgestaltet sein. Basierend auf einer derartigen Abdichtung der Öffnung des Gehäuses kann ein Innenbereich des Gehäuses trotz der Beweglichkeit der Koppelstange vor einem Eindringen des Transportguts geschützt werden.

Alternativ oder zusätzlich kann im Bereich der Öffnung ein zusätzlicher Abstreifring bzw. eine Abstreiflamelle angeordnet sein, um ein Eindringen von Staub oder Partikeln zwischen die Dichtungen und die Koppelstange zu verhindern. Durch diese Maßnahme kann eine Haltbarkeit der Dichtungen im Bereich der Öffnung erhöht werden.

Gemäß einem weiteren Ausführungsbeispiel weist die Ventilanordnung einen Fußabschnitt mit einem Ventilring und einer vom Ventilring durch mindestens eine Stützstrebe beabstandete Verbindungsplatte auf. Die Koppelstange erstreckt sich hierbei entlang der Verbindungsplatte oder durch die Verbindungsplatte hindurch und ist mit dem Ventilkörper verbunden, welcher eine in den Ventilring eingebrachte Ventilöffnung verschließen kann. Die Koppelstange kann sich hierbei im Wesentlichen parallel zu der mindestens einen Stützstrebe erstrecken.

Durch den Einsatz einen Fußabschnitt können die Ventilanordnung an unterschiedliche Geometrien eines Auslaufstutzens angepasst werden. Insbesondere kann das Gehäuse mit dem elektrischen Antrieb durch den Fußabschnitt ausreichend von der Ventilöffnung beabstandet werden, um einen ungehinderten Auslauf des Transportguts zu ermöglichen.

Nach einer weiteren Ausführungsform ist die Verbindungsplatte bodenseitig mit dem Gehäuse verbindbar oder als ein Boden des Gehäuses ausgeformt. Die Öffnung des Gehäuses ist in der als Boden des Gehäuses ausgebildeten Verbindungsplatte angeordnet. Hierdurch kann die Verbindungsplatte an eine Ausgestaltung des Gehäuses angepasst sein. Insbesondere können zusätzliche Verbindungskomponenten entfallen, wenn die Verbindungsplatte als ein Bestandteil des Gehäuses ausgeführt ist. Durch diese Maßnahme kann die Anzahl der benötigten Komponenten zur Herstellung der Ventilanordnung reduziert werden.

Die Ventilanordnung kann besonders kompakt ausgestaltet sein, wenn der Ventilring die Ventilöffnung aufweist, wobei die Ventilöffnung derart ausgeformt ist, dass der Ventilkörper in die Ventilöffnung hineinschiebbar ist, um die Ventilöffnung zu verschließen. Hierdurch kann die Ventilanordnung unabhängig vom Fahrzeug hergestellt werden. Aufgrund der Möglichkeit die Ventilanordnung mit dem Fußabschnitt herzustellen, kann diese an unterschiedliche Behälter angepasst sein und als eine Nachrüstlösung bereitgestellt werden.

Bevorzugterweise kann das Gehäuse mit dem elektrischen Antrieb, der Koppelstange, und dem Ventilkörper mit unterschiedlich ausgeformten Fußabschnitten kombinierbar sein. Durch diese Maßnahme kann der Fußabschnitt als Kupplungselement der Ventilanordnung zum Behälter dienen. Hierzu kann in einer technisch einfachsten Variante lediglich der Ventilring an einen Behälter angepasst werden.

Gemäß einem weiteren Ausführungsbeispiel verläuft ein Kanal zum Verlegen von elektrischen Leitungen durch die mindestens eine Stützstrebe und mündet in dem Gehäuse und/oder in der Verbindungsplatte. Durch diese Maßnahme kann eine fluiddichte elektrische Anbindung bereitgestellt werden. Insbesondere ist hierdurch keine zusätzliche Abdichtung oder ein zusätzliches Versiegeln der elektrischen Leitungen gegenüber dem Transportgut notwendig.

Die Ventilanordnung umfasst weiterhin ein Steuerungssystem. Das Steuerungssystem dient insbesondere zum automatisierten oder teilautomatisierten Durchführen eines Entladevorgangs des Transportfahrzeugs. Ein elektrischer Antrieb der Ventilanordnung ist durch eine Steuereinheit des Steuerungssystems zum Öffnen oder Schließen der Ventilanordnung antreibbar.

Das Steuerungssystem kann beispielsweise automatisch oder basierend auf Eingaben eines Benutzers einen Entladevorgang des Transportfahrzeugs ermöglichen. Alternativ oder zusätzlich kann das Steuerungssystem zum Anleiten eines Benutzers bei einer Durchführung eines Entladevorgangs eines Transportfahrzeugs dienen. Das Steuerungssystem kann hierzu eine digitale Anzeigeeinheit aufweisen und ist mit mindestens einem Sensor und mit mindestens einem Aktuator, wie beispielsweise dem elektrischen Antrieb, koppelbar sein.

Durch die Möglichkeit die Ventilanordnung elektrisch zu betätigen kann der Entladevorgang des Transportfahrzeugs vollständig automatisiert oder zumindest durch das Steuerungssystem gestützt durchgeführt werden. Insbesondere kann die Steuereinheit mit dem elektrischen Antrieb verbunden sein, um den elektrischen Antrieb zu steuern und zu regeln. Hierdurch können auch Parameter, wie beispielsweise Öffnungszustand oder Verschlusszustand des Ventilkörpers, durch die Steuereinheit ermittelt werden.

Die vollelektronische Steuerung der Ventilanordnung kann technisch besonders einfach umgesetzt werden, wenn ein Zustand der Ventilanordnung, insbesondere ein Öffnungsgrad und/oder ein Verschlusszustand, basierend auf eingestellten Betriebsparametern des elektrischen Antriebs und basierend auf einer Dauer des Betriebs des elektrischen Antriebs durch die Steuereinheit einstellbar und/oder auslesbar ist. Hierdurch kann auf einen Einsatz von Sensoren in der Ventilanordnung verzichtet, sodass die Ventilanordnung und das Steuerungssystem einen geringeren Komplexitätsgrad aufweisen. Es können somit die Herstellungskosten für die Ventilanordnung und das Steuerungssystem gesenkt werden.

Gemäß einem weiteren Ausführungsbeispiel ist die Steuereinheit über Stromleitungen und/oder einen CAN-Bus mit dem elektrischen Antrieb der Ventilanordnung verbunden. Durch den eingesetzten CAN-Bus können umfangreiche Informationen und Parameter zwischen der Ventilanordnung und der Steuereinheit ausgetauscht werden. Insbesondere können somit der elektrische Antrieb und damit auch die translatorische Bewegung der Koppelstange mit dem Ventilkörper besonders präzise durch die Steuereinheit ausgelenkt werden.

Ein Transportfahrzeug weist einen Behälter auf, welcher aus mindestens einer Kammer für ein flüssiges, staubförmiges oder körniges Füllgut besteht. Des Weiteren weist das Transportfahrzeug mindestens eine Ventilanordnung mit einem Steuerungssystem auf. Das Steuerungssystem kann ein fahrzeugseitiges oder ein fahrzeugexternes Steuerungssystem sein, welches mit der Ventilanordnung kabelgebunden oder drahtlos verbindbar ist.

Das Transportfahrzeug kann insbesondere als Silofahrzeug für staubförmige und rieselförmige Füllgüter ausgeführt sein. Das Füllgut bzw. Transportgut kann hierbei auch in flüssiger Form vorliegen. Das Transportfahrzeug kann ein Kippsilofahrzeug oder als ein selbsttragender Bodenentleerer mit einer oder mehreren Kammern sein. Das Transportfahrzeug kann insbesondere ein Sattelauflieger, ein Anhänger oder ein Transporter sein, welches mindestens einen Behälter zum Transportieren von einem Transportgut bzw. Füllgut aufweist.

Durch das Steuerungssystem können auch komplexe Transportfahrzeuge mit einer Vielzahl von Kammern intuitiv und kontrolliert entladen werden. Hierfür ist das Steuerungssystem mit Aktuatoren bzw. elektrischen Antrieben von Ventilvorrichtungen des Transportfahrzeugs vernetzt und kann somit eine geführte und bei Bedarf vollautomatisierte oder teilautomatisierte Entladung des Behälters bzw. der Kammern ermöglichen.

Nachstehend werden mehrere Ausführungsbeispiele der Erfindung anhand der Zeichnungen näher erläutert. Es zeigen:
Fig. 1 eine schematische Darstellung eines Transportfahrzeugs gemäß einer Ausführungsform der Erfindung,
Fig. 2 eine perspektivische Ansicht eines Auslaufstutzen des in Fig. 1 dargestellten Transportfahrzeugs,
Fig. 3 eine perspektivische Darstellung der Ventilanordnung gemäß einer erfindungsgemäßen Ausführungsform im geöffneten Zustand,
Fig. 4 eine weitere perspektivische Darstellung der Ventilanordnung gemäß der erfindungsgemäßen Ausführungsform im verschlossenen Zustand,
Fig. 5 eine Schnittdarstellung der Ventilanordnung aus Fig. 3,
Fig. 6 eine Schnittdarstellung A-A der Ventilanordnung aus Fig. 5,
Fig. 7A eine Detailansicht C aus Fig. 6,

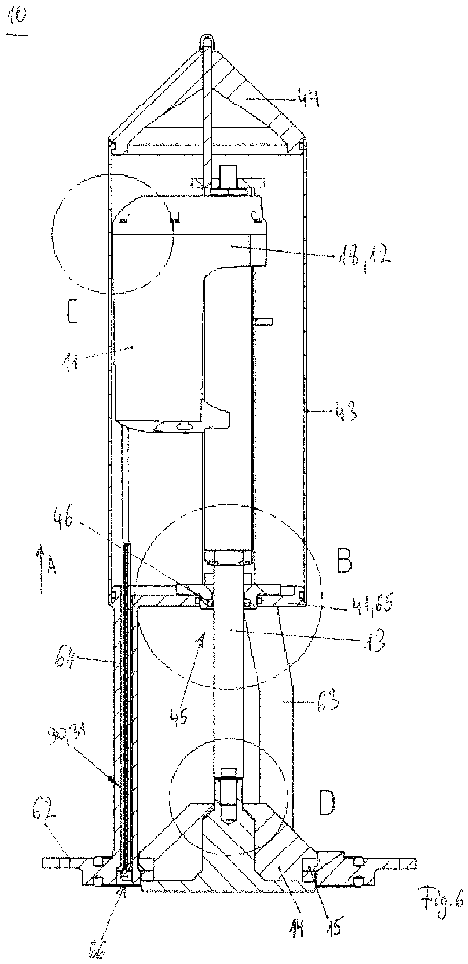

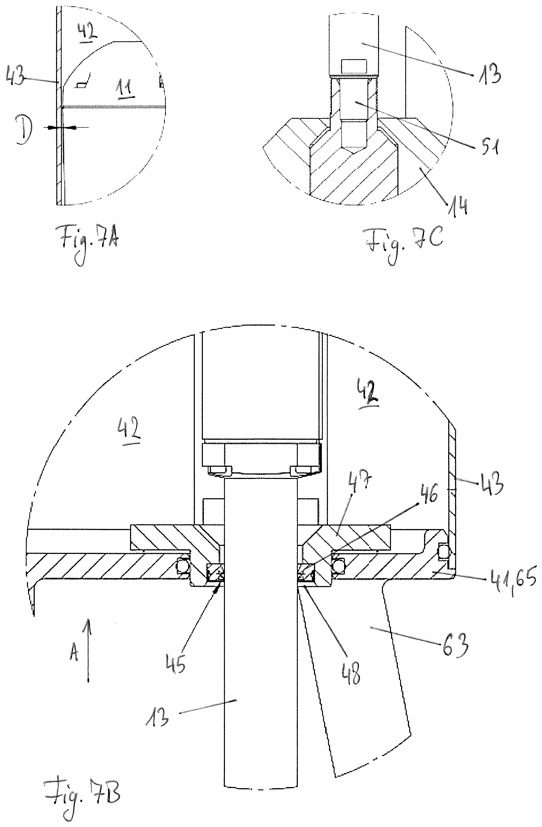

Fig. 7Beine Detailansicht B aus Fig. 6,
Fig. 7Ceine Detailansicht D aus Fig. 6,

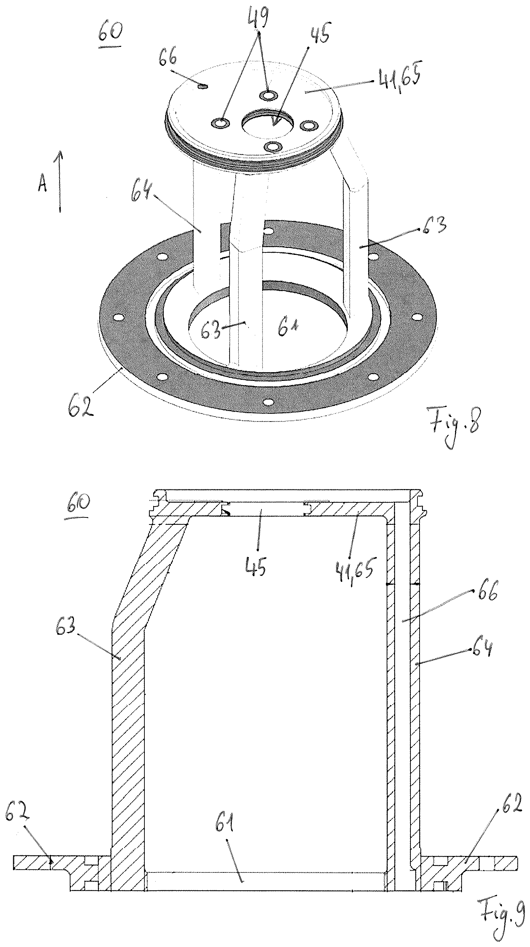

Fig. 8 eine perspektivische Darstellung des Fußabschnitts,
Fig. 9 eine Schnittdarstellung des Fußabschnitts aus Fig. 8, und

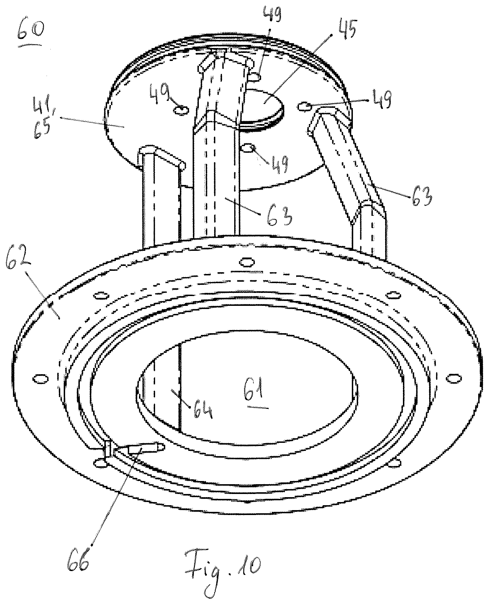

Fig. 10eine weitere perspektivische Darstellung des Fußabschnitts aus Fig. 8.

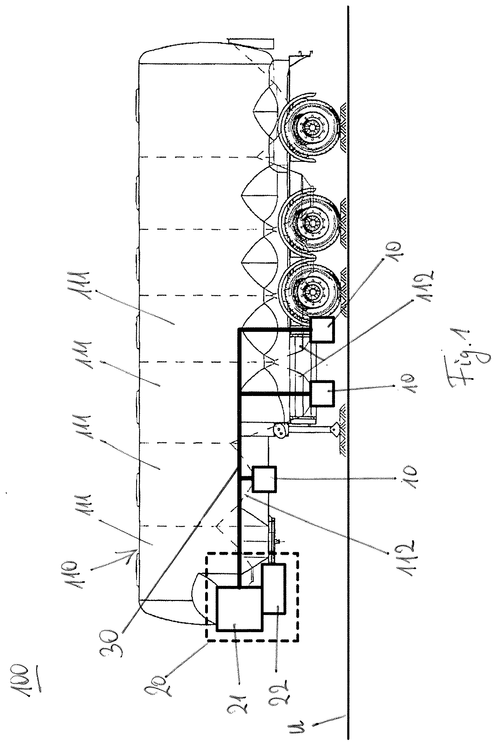

Die Fig. 1 zeigt eine schematische Darstellung eines Transportfahrzeugs 100 gemäß einer Ausführungsform der Erfindung. Das Transportfahrzeug 100 ist als ein Silofahrzeug bzw. Sattelauflieger ausgeformt und dient zum Transport von staubförmigem und rieselförmigem Füllgut. Hierzu weist das Transportfahrzeug 100 einen Behälter 110 zum Aufnehmen des Füllguts auf.

Der Behälter 110 weist gemäß dem dargestellten Ausführungsbeispiel mehrere Kammern 111 auf, welche in einer Reihe angeordnet sind. Die Kammern 111 können in Richtung eines Untergrunds U geöffnet und entleert werden. An einer dem Untergrund U des Transportfahrzeugs 100 zugewandten Seite geht der Behälter 110 bzw. die jeweiligen Kammern 111 in jeweils einen Auslaufstutzen 112 über.

An den jeweiligen Auslaufstutzen 112 ist jeweils eine Ventilanordnung 10 befestigt. Durch die Ventilanordnungen 10 können die Kammern 111 untergrundseitig geöffnet oder geschlossen werden. Der Übersicht halber sind nicht alle Ventilanordnungen 10 des Transportfahrzeugs 100 dargestellt.

Die Ventilanordnung 10 des Transportfahrzeugs 100 umfasst darüber hinaus ein Steuerungssystem 20.

Das Steuerungssystem 20 dient insbesondere zum automatisierten oder teilautomatisierten Durchführen eines Entladevorgangs des Transportfahrzeugs 100. Das Steuerungssystem 20 weist eine Steuereinheit 21 und ein Bedienungsterminal 22 auf. Durch das Bedienungsterminal 22 kann ein, nicht dargestellter, Benutzer auf die Steuereinheit 21 zugreifen und die Ventilanordnungen 10 steuern. Hierzu ist die Steuereinheit 21 mit einem CAN-Bus 30 verbunden. Durch den CAN-Bus 30 können Steuerbefehle von der Steuereinheit 21 an die Ventilanordnungen 10 übermittelt werden. Darüber hinaus können Betriebsparameter, wie beispielsweise Öffnungszustand bzw. Öffnungsgrad sowie der Verschlusszustand der Ventilanordnungen 10 von der Steuereinheit 21 empfangen werden.

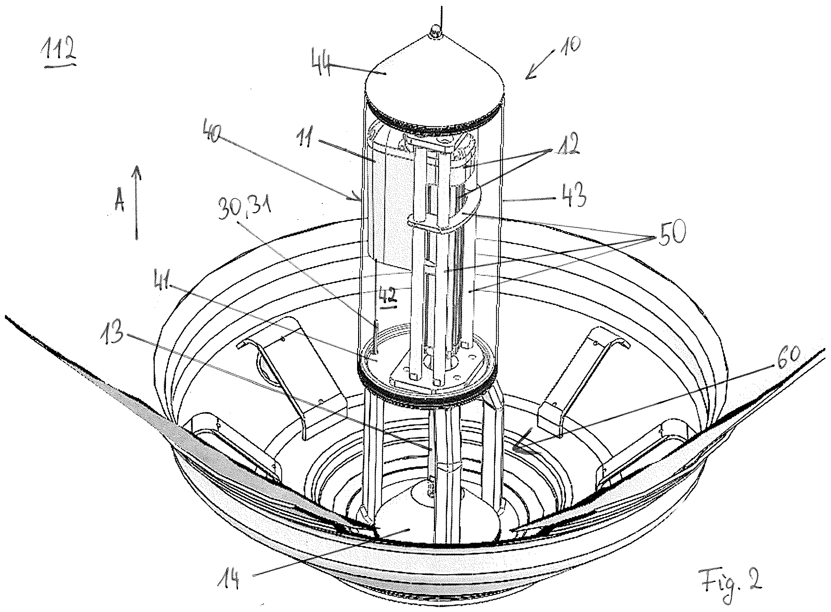

Die Fig. 2 zeigt einen Auslaufstutzen 112 des in Fig. 1 dargestellten Transportfahrzeugs 100. In dem Auslaufstutzen 112 ist die Ventilanordnung 10 befestigt. Die Ventilanordnung 10 weist gemäß dem dargestellten Ausführungsbeispiel einen elektrischen Antrieb 11 und eine mechanische Übersetzung 12 auf.

Der elektrische Antrieb 11 ist als ein Elektromotor oder als ein Servomotor ausgeprägt. Der elektrische Antrieb 11 kann ein Drehmoment auf die mechanische Übersetzung 12 übertragen, welche die Drehbewegung des elektrischen Antriebs 11 in eine translatorische Bewegung umwandelt. Die translatorische Bewegung kann hierbei in Richtung oder entgegen einer Richtung einer Bewegungsachse A erfolgen.

Die mechanische Übersetzung 12 ist mit einer Koppelstange 13 verbunden. Durch das Betätigen des elektrischen Antriebs 11 kann die Koppelstange 13 relativ zum elektrischen Antrieb 11 entlang der Bewegungsachse A bewegt werden.

An einem der mechanischen Übersetzung 12 entgegengesetzten Ende der Koppelstange 13 ist ein Ventilkörper 14 angeordnet. Der Ventilkörper 14 ist konisch geformt und verjüngt sich somit zur Koppelstange 13 hin. Der Ventilkörper 14 dient als Verschlussstopfen des Auslaufstutzens 112.

Der elektrische Antrieb 11 und die mechanische Übersetzung 12 sind innerhalb eines Gehäuses 40 angeordnet. Insbesondere sind der elektrische Antrieb 11 und die mechanische Übersetzung 12 über eine Befestigungsstruktur 50 im Gehäuse 40 angeordnet.

Die Koppelstange 13 ragt durch einen Gehäuseboden 41 in einen Innenraum 42 des Gehäuses 40 hinein. Des Weiteren ist der CAN-Bus 30 ebenfalls durch den Gehäuseboden 41 in den Innenraum 42 geführt. Die Befestigungsstruktur 50 ist ebenfalls im Innenraum 42 angeordnet und ist am Gehäuseboden 41 verschraubt.

An dem Gehäuseboden 41 ist eine Gehäusewandung 43 befestigt. Das Gehäuse 40 ist im Wesentlichen zylindrisch geformt, wobei die Gehäusewandung 43 einen Zylindermantel ausbildet.

Des Weiteren geht die Gehäusewandung 43 in einen konisch ausgebildeten Gehäusedeckel 44 über. Das Gehäuse 40 ist vorzugsweise gegen das Füllgut und insbesondere gegen Fluide abgedichtet.

Das Gehäuse 40 besteht aus dem Gehäuseboden 41, dem Gehäusedeckel 44 und der Gehäusewandung 43. Insbesondere ist das Gehäuse 40 durch einen Fußabschnitt 60 mit dem Auslaufstutzen 112 mechanische gekoppelt.

Bei einem Öffnen der Ventilanordnung 10 entsteht eine Strömung des Füllguts im Bereich des Auslaufstutzens 112. Durch die konische Form des Gehäusedeckels

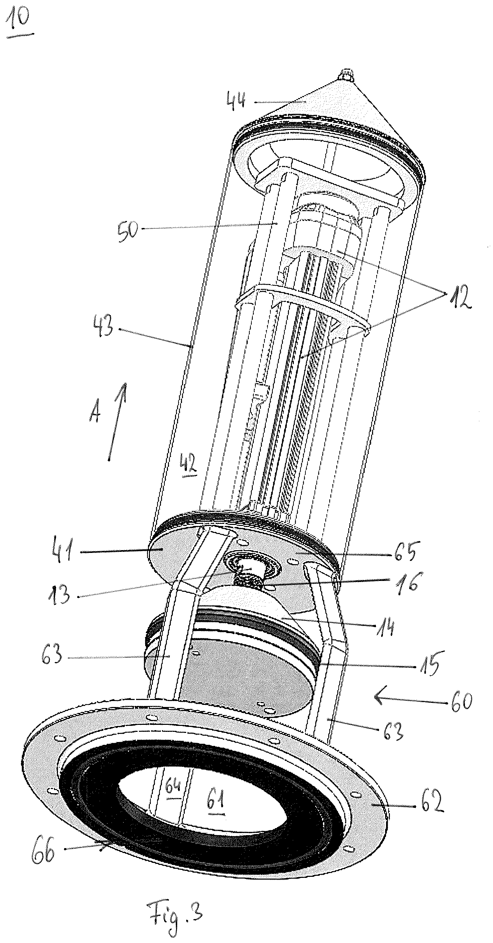

Fig. 3 zeigt eine perspektivische Darstellung der Ventilanordnung 10 gemäß einer erfindungsgemäßen Ausführungsform. Die Ventilanordnung 10 ist in einem geöffneten Zustand dargestellt. Hierzu ist der Ventilkörper 14 von einer Ventilöffnung 61 beabstandet. Der Ventilkörper 14 weist eine umfangsseitig umlaufende Dichtung 15 auf, welche in einem geschlossenen Zustand der Ventilanordnung 10 gegen einen Ventilring 62 des Fußabschnitts 60 dichtend wirkt.

Der Fußabschnitt 60 weist den Ventilring 62 auf, welcher durch drei Stützstreben 63, 64 entlang der Bewegungsachse A von einer Verbindungsplatte 65 beabstandet ist.

In der dargestellten Perspektive ist der Gehäuseboden 41 erkennbar, durch welchen sich die Koppelstange 13 hindurch erstreckt. Gemäß dem dargestellten Ausführungsbeispiel ist die Verbindungsplatte 65 als der Gehäuseboden 41 ausgestaltet.

Die Koppelstange 13 ist über ein Kupplungselement 16 mit dem Ventilkörper 14 verbunden. Das Kupplungselement 16 kann hierbei als ein elastisches Zwischenelement oder als eine Feder ausgestaltet sein, wodurch die Dichtung 15 des Ventilkörpers 14 gegen eine Überbeanspruchung geschützt wird.

Zum Einbringen von elektrischen Leitungen 31, wie beispielsweise vom CAN-Bus 30, weist eine Stützstrebe 64 einen Kanal 66 auf. Der Kanal 66 erstreckt sich von dem Ventilring 62 ausgehend durch die Stützstrebe 64 und durch den Gehäuseboden 41 hindurch in den Innenraum 42 des Gehäuses 40.

Der Ventilring 62 umgibt die Ventilöffnung 61 und ist als ein Flansch ausgebildet. Insbesondere kann der Ventilring 62 mit dem Auslaufstutzen 112 fluiddicht verschraubt werden und dient als Befestigung der Ventilanordnung 10 an dem Auslaufstutzen 112.

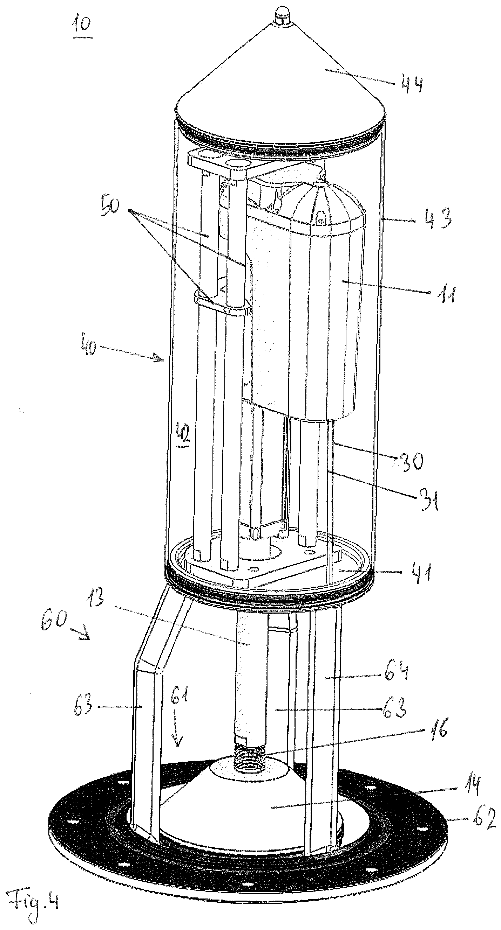

Die Fig. 4 zeigt eine weitere perspektivische Darstellung der Ventilanordnung 10 gemäß der erfindungsgemäßen Ausführungsform. Die Ventilanordnung 10 ist hier in einem geschlossenen Zustand. Die Koppelstange 13 presst den Ventilkörper 14 und insbesondere die Dichtung 15 gegen den Ventilring 62, wodurch die Ventilöffnung 61 verschlossen wird.

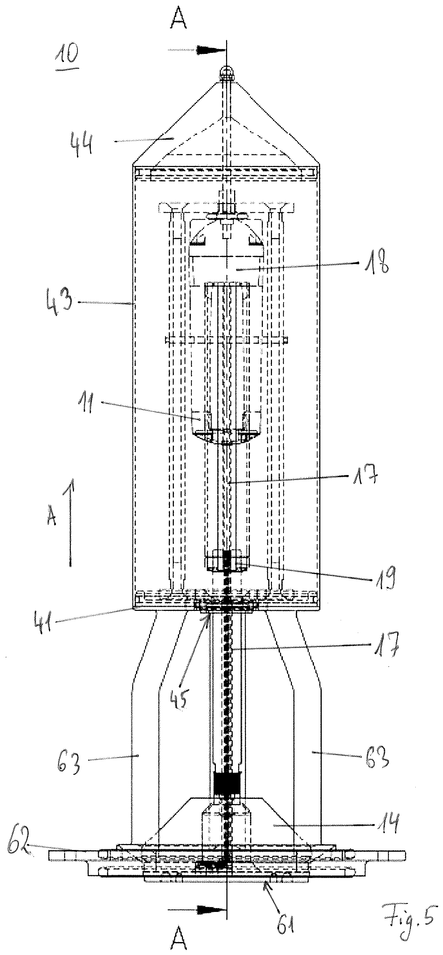

In Fig. 5 ist eine Schnittdarstellung der Ventilanordnung aus Fig. 3 gezeigt. Insbesondere wird der Aufbau der mechanischen Übersetzung 12 veranschaulicht. Die mechanische Übersetzung 12 ist gemäß dem Ausführungsbeispiel als ein Gewindespindeltrieb ausgestaltet. Hierzu wird eine Gewindespindel 17 über ein Getriebe 18 von dem elektrischen Antrieb 11 angetrieben. Die Gewindespindel 17 steht im Eingriff mit einem Gewinde 19 der Koppelstange 13. Das Getriebe 18 kann hierbei in Form eines Riementriebs, in Form von Zahnrädern oder als ein Kettentrieb ausgeformt sein.

Da die Koppelstange 13 gegen ein Verdrehen gesichert ist, kann eine Drehbewegung der Gewindespindel 17 das Gewinde 19 und damit auch die Koppelstange 13 entlang der Bewegungsachse A präzise heben oder senken.

Durch das Heben der Koppelstange 13 wird diese durch eine Öffnung 45 im Gehäuseboden 41 in das Gehäuse 40 hineingezogen. Bei diesem Vorgang wird der Ventilkörper 14 von dem Ventilring 62 beabstandet, wodurch die Ventilanordnung 10 geöffnet wird.

Wird die Koppelstange 13 aus dem Gehäuse 40 hinausgeschoben, so bewegt sich der Ventilkörper 14 gegen den Ventilring 62. Hierdurch erfolgt ein Verschluss der Ventilanordnung 10. Zum Verschließen der Ventilöffnung 61 kann die Dichtung 15 des Ventilkörpers 14 radial und/oder axial gegen den Ventilring 62 wirken.

Die Fig. 6 zeigt eine Schnittdarstellung entlang einer Linie A-A der Ventilanordnung 10 aus Fig. 5. Durch diese Darstellung ist die Anordnung der Koppelstange 13 verdeutlicht. Die Koppelstange 13 erstreckt sich durch den Gehäuseboden 41 hindurch. Der Gehäuseboden 41 ist als ein Abschnitt bzw. die Verbindungsplatte 65 des Fußabschnitts 60 ausgestaltet. Die Öffnung 45 im Gehäuseboden 41 ist mit einer Wellendichtung 46 ausgestattet. Die Kopplungsstange 13 ist zylindrisch bzw. rohrförmig ausgeführt und kann entlang der Bewegungsachse A an der Wellendichtung 46 entlang gleiten. Durch die Wellendichtung 46 bleibt der Innenraum 42 des Gehäuses 40 gegen das Füllgut des Behälters 110 abgedichtet.

Des Weiteren veranschaulicht die Schnittdarstellung den Kanal 66, welcher sich durch die Stützstrebe 64, den Gehäuseboden 41 und durch den Ventilring 62 hindurchstreckt. Durch den Kanal 66 können elektrische Leitungen 31 zum Versorgen des elektrischen Antriebs 11 mit Energie sowie weitere Leitungen, wie beispielsweise ein CAN-Bus 30, zum Ermitteln eines Zustands der Ventilanordnung 10 verlegt werden.

Die Fig. 7 zeigt Detailansichten der Ventilanordnung 10 aus Fig. 6. Insbesondere ist in der Fig. 7A eine Detailansicht C aus Fig. 6 dargestellt, welche die Anordnung des elektrischen Antriebs 11 im Innenraum 42 des Gehäuses 40 verdeutlicht. Der elektrische Antrieb 11 ist gegen die Gehäusewandung 43 gelehnt bzw. verläuft parallel zu der Gehäusewandung 43 mit einem geringen Abstands D.

In der Fig. 7B ist eine Detailansicht B aus Fig. 6 gezeigt. Die Fig. 7B verdeutlicht den Bereich der Ventilanordnung 10 im Bereich der Öffnung 45 im Gehäuseboden 41. In der Öffnung 45 ist eine Trägerplatte 47 eingelassen, welche die Wellendichtung 46 aufnimmt. Zusätzlich zu der Wellendichtung 46 ist ein Abstreifring 48 vorgesehen, welcher die Wellendichtung 46 vor dem Füllgut schützt. Der Abstreifring 48 kann beispielsweise aus einem Metall hergestellt sein und schwimmend an der Trägerplatte 47 angeordnet sein. Die Wellendichtung 46 kann beispielsweise als ein Wellendichtring oder als ein sogenannter Simmerring ausgeführt sein.

Die Fig. 7C zeigt eine Detailansicht D aus Fig. 6. Es wird insbesondere verdeutlicht, dass der Ventilkörper 14 über ein Befestigungsmittel 51 mit der Koppelstange 13 verbunden ist. Das Befestigungsmittel 51 ist im dargestellten Ausführungsbeispiel als eine Schraubverbindung ausgestaltet. Im Unterschied zu den bereits beschriebenen Ausführungsbeispielen, ist hier der Ventilkörper 14 ohne ein Kupplungselement 16 mit der Koppelstange 13 verbunden.

In der Fig. 8 ist eine perspektivische Darstellung des Fußabschnitts 60 illustriert. Der Fußabschnitt 60 weist eine Verbindungsplatte 65 auf, welche als der Gehäuseboden 41 ausgeformt ist. Der Gehäuseboden 41 ist durch drei Stützstreben 63, 64 in Richtung der Bewegungsachse A von dem Ventilring 62 beabstandet. Die Stützstreben 63, 64 sind abschnittsweise voneinander weggespreizt und ermöglichen somit die Verwendung eines größeren Ventilkörpers 14.

Durch eine Stützstrebe 64 verläuft ein Kanal 66 zum Verlegen von elektrischen Leitungen 30, 31, durch welche der elektrische Antrieb 11 beispielsweise mit Energie versorgt werden kann.

Im Gehäuseboden 41 sind darüber hinaus Befestigungsbohrungen 49 eingebracht. Die Befestigungsbohrungen 49 sind jeweils mit einem Innengewinde versehen und können aus dem Innenraum 42 des Gehäuses 40 zum Befestigen der Befestigungsstruktur 50 genutzt werden.

Die Fig. 9 verdeutlicht in einer Schnittdarstellung den Aufbau des Fußabschnitts 60 aus Fig. 8. Insbesondere wird in der Fig. 9 die Anordnung der Ventilöffnung 61 und der Öffnung 45 im Gehäuseboden 41 bzw. der Verbindungsplatte 65 veranschaulicht.

In der gewählten Schnittdarstellung ist darüber hinaus der Kanal 66 sichtbar, welcher sich durch den Ventilring 62 und die Verbindungsstütze 64 hindurch erstreckt.

In der Fig. 10 kann durch eine weitere perspektivische Darstellung des Fußabschnitts 60 aus Fig. 8 der Verlauf des Kanals 66 zum Führen von elektrischen Leitungen 31 veranschaulicht werden.

Der Kanal 66 verläuft im Bereich des Ventilrings 62 radial seitlich von der Ventilöffnung 61 weggerichtet. Durch die Ausführung des Kanals 66 kann der elektrische Antrieb 11 ohne zusätzliche Dichtungsmittel mit elektrischer Energie versorgt werden. Der Kanal 66 verläuft abseits von einem Füllgut des Behälters 110.

Das in Fig. 10 dargestellte Ausführungsbeispiel des Fußabschnitts 60 zeigt, dass die Befestigungsbohrungen 49 sich durch die Verbindungsplatte 65 hindurch erstrecken bzw. als Durchgangsbohrungen ausgestaltet sein können.

### Bezugszeichenliste

- 100: Transportfahrzeug
- 110: Behälter
- 111: Kammer des Behälters
- 112: Auslaufstutzen der Kammer oder des Behälters

- 10: Ventilanordnung
- 11: elektrischer Antrieb
- 12: mechanische Übersetzung
- 13: Koppelstange
- 14: Ventilkörper
- 15: Dichtung des Ventilkörpers
- 16: Kupplungselement
- 17: Gewindespindel
- 18: Getriebe
- 19: Gewinde in der Koppelstange

- 20: Steuerungssystem
- 21: Steuereinheit
- 22: Bedienungsterminal
- 30: CAN-Bus
- 31: elektrische Leitung

- 40: Gehäuse
- 41: Gehäuseboden
- 42: Innenraum des Gehäuses
- 43: Gehäusewandung
- 44: Gehäusedeckel
- 45: Öffnung
- 46: Wellendichtung
- 47: Trägerplatte
- 48: Abstreifring
- 49: Befestigungsbohrungen
- 50: Befestigungsstruktur
- 51: Befestigungsmittel

- 60: Fußabschnitt
- 61: Ventilöffnung
- 62: Ventilring
- 63: Stützstrebe ohne einen integrierten Kanal
- 64: Stützstrebe mit einem integrierten Kanal
- 65: Verbindungsplatte
- 66: Kanal

- A: Bewegungsachse der translatorischen Bewegung
- D: Abstand zwischen Gehäusewandung und Antrieb

## Patentansprüche

1. Ventilanordnung (10), insbesondere zum Öffnen oder Verschließen einer Ventilöffnung (61) eines Behälters (110) von einem Transportfahrzeug (100), aufweisend einen elektrischen Antrieb (11), aufweisend eine mit dem elektrischen Antrieb (11) direkt oder über eine mechanische Übersetzung (12) verbundene Koppelstange (13), aufweisend einen endseitig an der Koppelstange (13) angeordneten Ventilkörper (14) zum Freigeben oder Schließen der Ventilöffnung (61), **dadurch gekennzeichnet, dass** der elektrische Antrieb (11) in einem gegen Fluide abgedichteten Gehäuse (40) angeordnet ist, wobei die Koppelstange (13) relativ zum Gehäuse (40) translatorisch verfahrbar ist und sich durch eine Öffnung (45) des Gehäuses (40) hindurch erstreckt.

2. Ventilanordnung nach Anspruch 1, wobei der elektrische Antrieb (11) dazu eingerichtet ist, die Koppelstange (13) und den mit der Koppelstange (13) verbundenen Ventilkörper (14) entlang einer Bewegungsachse (A) zu bewegen, wobei der elektrische Antrieb (11) als ein elektrischer Linearmotor oder als ein mit der mechanischen Übersetzung wechselwirkender Elektromotor ausgestaltet ist.

3. Ventilanordnung nach Anspruch 1 oder 2, wobei die mechanische Übersetzung (12) dazu eingerichtet ist, eine Rotationsbewegung des elektrischen Antriebs (11) in eine translatorische Bewegung umzuwandeln, wobei die mechanische Übersetzung (12) als ein Gewindespindeltrieb, ein Zahnstangentrieb oder ein Riementrieb ausgeführt ist.

4. Ventilanordnung nach einem der Ansprüche 1 bis 3, wobei die Öffnung (45) und/oder die durch die Öffnung (45) aus dem Gehäuse (40) hinausragende Koppelstange (13) durch mindestens eine Dichtung und/oder Wellendichtring (46) gegen Fluide abgedichtet sind.

5. Ventilanordnung nach einem der Ansprüche 1 bis 4, wobei die Ventilanordnung (10) einen Fußabschnitt (60) mit einem Ventilring (62) und einer vom Ventilring (62) durch mindestens eine Stützstrebe (63, 64) beabstandete Verbindungsplatte (65) aufweist.

6. Ventilanordnung nach Anspruch 5, wobei die Verbindungsplatte (65) bodenseitig mit dem Gehäuse (40) verbindbar ist oder als ein Boden (41) des Gehäuses (40) ausgeformt ist, wobei die Öffnung (45) des Gehäuses (40) in der als Boden (41) des Gehäuses (40) ausgebildeten Verbindungsplatte (65) angeordnet ist.

7. Ventilanordnung nach Anspruch 5 oder 6, wobei der Ventilring (62) die Ventilöffnung (61) aufweist, wobei die Ventilöffnung (61) derart ausgeformt ist, dass der Ventilkörper (14) in die Ventilöffnung (61) hineinschiebbar ist, um die Ventilöffnung (61) zu verschließen.

8. Ventilanordnung nach einem der Ansprüche 5 bis 6, wobei ein Kanal (66) zum Verlegen von elektrischen Leitungen (30, 31) durch die mindestens eine Stützstrebe (64) verläuft und in dem Gehäuse (40) und/oder in der Verbindungsplatte (65) mündet.

9. Ventilanordnung gemäß einem der Ansprüche 1 bis 8, umfassend ein Steuerungssystem (20), wobei ein elektrischer Antrieb (11) der Ventilanordnung (10) durch eine Steuereinheit (21) des Steuerungssystems (20) zum Öffnen oder Schließen der Ventilanordnung (10) antreibbar ist, wobei ein Zustand der Ventilanordnung (10), insbesondere ein Öffnungsgrad und/oder ein Verschlusszustand, basierend auf eingestellten Betriebsparametern des elektrischen Antriebs (11) und basierend auf einer Dauer des Betriebs des elektrischen Antriebs (11) durch die Steuereinheit (21) einstellbar und/oder auslesbar ist.

10. Ventilanordnung nach Anspruch 9, wobei die Steuereinheit (21) über elektrische Leitungen (31) und/oder einen CAN-Bus (30) mit dem elektrischen Antrieb (11) der Ventilanordnung (10) verbunden ist.

## Claims

1. Valve arrangement (10), in particular for opening or closing a valve opening (61) of a tank (110) of a transport vehicle (100), having an electric drive (11), having a coupling rod (13) connected to the electric drive (11) directly or via a mechanical transmission (12), having a valve body (14) arranged at the end of the coupling rod (13) for releasing or closing the valve opening (61), **characterized in that** the electric drive (11) is arranged in a housing (40) sealed against fluids, wherein the coupling rod (13) is translationally displaceable relative to the housing (40) and extends through an opening (45) of the housing (40).

2. Valve arrangement according to claim 1, wherein the electric drive (11) is configured to move the coupling rod (13) and the valve body (14) connected to the coupling rod (13) along an axis of movement (A), wherein the electric drive (11) is configured as an electric linear motor or as an electric motor interacting with the mechanical transmission.

3. Valve arrangement according to claim 1 or 2, wherein the mechanical transmission (12) is configured to convert a rotational movement of the electric drive (11) into a translational movement, wherein the mechanical transmission (12) is configured as a threaded spindle drive, a rack and pinion drive or a belt drive.

4. Valve arrangement according to one of claims 1 to 3, wherein the opening (45) and/or the coupling rod (13) projecting out of the housing (40) through the opening (45) are sealed against fluids by at least one seal and/or shaft seal ring (46).

5. Valve arrangement according to one of claims 1 to 4, wherein the valve arrangement (10) has a foot section (60) with a valve ring (62) and a connecting plate (65) spaced apart from the valve ring (62) by at least one support web (63, 64).

6. Valve arrangement according to claim 5, wherein the connecting plate (65) is connectable to the housing (40) on the ground side or is formed as a floor (41) of the housing (40), wherein the opening (45) of the housing (40) is arranged in the connecting plate (65) formed as a floor (41) of the housing (40).

7. Valve arrangement according to claim 5 or 6, wherein the valve ring (62) has the valve opening (61), wherein the valve opening (61) is formed in such a way that the valve body (14) is slidable into the valve opening (61) to close the valve opening (61).

8. Valve arrangement according to one of claims 5 to 6, wherein a duct (66) for routing electrical lines (30, 31) extends through the at least one support web (64) and opens into the housing (40) and/or into the connection plate (65).

9. Valve arrangement according to one of claims 1 to 8, comprising a control system (20), wherein an electric drive (11) of the valve arrangement (10) can be driven by a control unit (21) of the control system (20) for opening or closing the valve arrangement (10), wherein a state of the valve arrangement (10), in particular a degree of opening and/or a closing state, can be adjusted and/or read out based on adjusted operation parameters of the electric drive (11) and based on a duration of operation of the electric drive (11) by the control unit (21).

10. Valve arrangement according to claim 9, wherein the control unit (21) is connected to the electric drive (11) of the valve arrangement (10) via electrical lines (31) and/or a CAN bus (30).

## Revendications

1. Agencement de soupape (10), en particulier pour ouvrir ou fermer une ouverture de soupape (61) d'un récipient (110) d'un véhicule de transport (100), présentant un entraînement électrique (11), présentant une tige de couplage (13) reliée à l'entraînement électrique (11) directement ou par l'intermédiaire d'une transmission mécanique (12), présentant un corps de soupape (14) disposé à l'extrémité de la tige de couplage (13) pour libérer ou fermer l'ouverture de soupape (61), **caractérisé en ce que** l'entraînement électrique (11) est disposé dans un boîtier (40) étanche aux fluides, la tige de couplage (13) pouvant être déplacée en translation par rapport au boîtier (40) et s'étendant à travers une ouverture (45) du boîtier (40).

2. Agencement de soupape selon la revendication 1, dans lequel l'entraînement électrique (11) est conçu pour déplacer la tige d'accouplement (13) et le corps de soupape (14) relié à la tige d'accouplement (13) le long d'un axe de déplacement (A), l'entraînement électrique (11) étant conçu comme un moteur électrique linéaire ou comme un moteur électrique interagissant avec la transmission mécanique.

3. Agencement de soupape selon la revendication 1 ou 2, dans lequel la transmission mécanique (12) est conçue pour transformer un mouvement de rotation de l'entraînement électrique (11) en un mouvement de translation, la transmission mécanique (12) étant réalisée sous la forme d'un entraînement par broche filetée, d'un entraînement par crémaillère ou d'un entraînement par courroie.

4. Agencement de soupape selon l'une des revendications 1 à 3, dans lequel l'ouverture (45) et/ou la tige de couplage (13) dépassant du boîtier (40) à travers l'ouverture (45) sont rendues étanches aux fluides par au moins un joint d'étanchéité et/ou une bague à lèvres (46).

5. Agencement de soupape selon l'une des revendications 1 à 4, dans lequel l'agencement de soupape (10) comprend une section de pied (60) avec une bague de soupape (62) et une plaque de liaison (65) espacée de la bague de soupape (62) par au moins une entretoise de support (63, 64).

6. Agencement de soupape selon la revendication 5, dans lequel la plaque de liaison (65) peut être reliée au boîtier (40) du côté du fond ou est formée comme un fond (41) du boîtier (40), l'ouverture (45) du boîtier (40) étant disposée dans la plaque de liaison (65) formée comme un fond (41) du boîtier (40).

7. Agencement de soupape selon la revendication 5 ou 6, dans lequel la bague de soupape (62) comprend l'ouverture de soupape (61), l'ouverture de soupape (61) étant formée de telle sorte que le corps de soupape (14) peut être poussé dans l'ouverture de soupape (61) pour fermer l'ouverture de soupape (61).

8. Agencement de soupape selon l'une des revendications 5 à 6, dans lequel un canal (66) pour la pose de câbles électriques (30, 31) traverse ladite au moins une entretoise de support (64) et débouche dans le boîtier (40) et/ou dans la plaque de liaison (65).

9. Agencement de soupape selon l'une des revendications 1 à 8, comprenant un système de commande (20), dans lequel un entraînement électrique (11) de l'agencement de soupape (10) peut être entraîné par une unité de commande (21) du système de commande (20) pour ouvrir ou fermer l'agencement de soupape (10), un état de l'agencement de soupape (10), en particulier un degré d'ouverture et/ou un état de fermeture, pouvant être réglé et/ou lu par l'unité de commande (21) sur la base de paramètres de fonctionnement réglés de l'entraînement électrique (11) et sur la base d'une durée de fonctionnement de l'entraînement électrique (11).

10. Agencement de soupape selon la revendication 9, dans lequel l'unité de commande (21) est reliée à l'entraînement électrique (11) de l'agencement de soupape (10) par des lignes électriques (31) et/ou un bus CAN (30).
